# EUROPÄISCHE PATENTSCHRIFT

(11) **EP 0 320 893 B1**
(45) Veröffentlichungstag und Bekanntmachung des Hinweises auf die Patenterteilung: **24.02.1993**
(21) Anmeldenummer: 88120857.3
(22) Anmeldetag: 14.12.1988
(51) Int. Cl.: F16L 5/02

(54) **Vorrichtung zur wasser- und gasdichten Durchführung von langgestreckten Gegenständen durch Bauwerkswände**
Device for the water and gas tight passage of elongate elements through the walls of buildings
Dispositif pour la traversée étanche à l'eau et au gaz d'éléments allongés à travers des parois de bâtiments

(30) Priorität: 16.12.1987 DE 3742689
(43) Veröffentlichungstag der Anmeldung: 21.06.1989
(73) Patentinhaber: RXS Schrumpftechnik-Garnituren GmbH, D-58093 Hagen (DE)
(72) Erfinder: Breuer, Peter, Dipl.-Ing., D-5800 Hagen 7 (DE); Hoppe, Günter, D-5800 Hagen 5 (DE); Hunke, Roland, Dipl.-Ing., D-5860 Iserlohn (DE); Winterhoff, Hans, Dipl.-Ing., D-5800 Hagen 1 (DE)
(74) Vertreter: Fuchs, Franz-Josef, Dr.-Ing.

(56) Entgegenhaltungen:
- EP-A- 0 179 657
- DE-C- 869 888
- US-A- 2 620 208
- US-A- 4 685 173

## Beschreibung

Die Erfindung betrifft eine wasser- und gasdichte Durchführung von langgestreckten Gegenständen, wie Rohren, elektrischen Leitungen oder Kabeln, durch Bauwerkswände mit Hilfe eines Schutzrohres in der Maueröffnung und Abdichtungen zum eingeführten Gegenstand, wobei zumindest an einer Mauerseite ein die Maueröffnung abschließendes, rohrförmiges Abschlußelement angeordnet ist, das Abschlußelement ein Rohrstück und einen senkrecht zur Achse der Maueröffnung radial nach auswärts gerichteten Ringflansch aufweist, wobei weiter das Schutzrohr innerhalb der Maueröffnung bis in das Abschlußelement reichend angeordnet ist, weiterhin Abdichtungen zwischen dem Abschlußelement und dem eingeführten Kabel zumindest auf der mit dem Abschlußelement versehenen Mauerseite, Vorzugsweise auf der Außenseite der Mauer, vorgesehen sind und wobei außerdem der Ringflansch vom Rohrstück getrennt ist, das Rohrstück beweglich und dicht in der Öffnung des Ringflansches angeordnet ist und die Dichtflächen als umlaufende, sich berührende Flächen ausgebildet sind.

Aus der europäischen Patentanmeldung EP 0 318 019 A1 ist bereits eine Vorrichtung für die Durchführung von langgestreckten Gegenständen durch Bauwerkswände bekannt, wobei diese Vorrichtung zumindest im Abdichtungsbereich ein starres Rohrstück aufweist. Die Abdichtung zum Mauerwerk erfolgt durch einen Ringflansch, der über ein geeignetes, meist plastisches Dichtungsmaterial gegen die Mauerwand gepreßt wird. Bei schräg angelegten Maueröffnungen könnten sich hier für das Einbringen des Rohrstückes Schwierigkeiten ergeben, da in solchen Fällen die Achse des Rohrstückes nicht mit der Achse der Maueröffnung ausgerichtet werden kann. Durch das plastische Dichtungsmaterial zwischen dem Ringflansch und der Mauer läßt sich etwa eine Schrägführung der Maueröffnung bis zu 10° Abweichung verkraften, doch könnten bei einer solchen Montage bereits Schwierigkeiten auftreten.

Aus der US-Patentschrift 2.620.208 ist weiterhin eine Dichtmanschette bekannt, die als nahezu zylindrisches Bauteil mit axial hintereinanderliegenden Wellungen versehen ist, wodurch eine Bewegung der im Inneren befindlichen und über Gelenke miteinander verbundenen Maschinenbauteile ermöglicht wird. Eine Abstützung bzw. Fixierung im Inneren von Durchführungsöffnungen ist hiermit jedoch nicht durchführbar.

Aus der deutschen Patentschrift 869 888 ist eine Abdichtung an Rohren, Kabeln oder dergleichen Leitungen bei Mauerdurchbrüchen bekannt, wobei im Bereich der Einführung des betreffenden Gegenstandes eine Ausrichtung dieses Gegenstandes auf die Maueröffnung erfolgen kann. Bei dieser Mauerdurchführung wird bereits beim Erstellen der Betonmauer ein Durchführungsrohr eingegossen, an dessen einem Ende ein freier Flansch vorgesehen ist, an dem die Ausrichtvorrichtung mit der Dichtung zum eingeführten Gegenstand angesetzt ist. Diese Abdichtvorrichtung ist somit nur für bereits beim Bau des Mauerwerks vorgesehene Mauerdurchbrüche anzuwenden, wobei sich dadurch die Problematik zur Abdichtung der Vorrichtung gegen das Mauerwerk nicht stellt. Eine solche Vorrichtung kann jedoch bei nachträglich einzubringenden Durchführungen nicht eingesetzt werden. Außerdem erfolgt hier eine Ausrichtung des eingeführten Gegenstandes.

Weiterhin ist ein Dichtungseinsatz für eine Mauerdurchführung aus der europäischen Patentanmeldung 0 179 657 - A2 bekannt, bei dem im Einführungsbereich ein Faltenbalg verwendet wird, dessen Falten hintereinanderliegend in Einführungsrichtung angeordnet sind. Die Abdichtung zur Maueröffnung erfolgt hier ausschließlich innerhalb der zylindrischen Maueröffnung, wobei ein elastisches Rohrelement vorgesehen ist, das durch einen komplizierten aufweitbaren Auslösemechanismus gegen die zylindrische Wandung der Mauer gedrückt wird.

Es ergibt sich für vorliegende Erfindung die Aufgabe, eine wasser- und gasdichte Durchführung von langgestreckten Gegenständen zu schaffen, mit der auch bei schräg angesetzten Maueröffnungen eine problemlose Montage ermöglicht werden kann.

Die gestellte Aufgabe wird nun mit einer ersten Durchführung der eingangs erläuterten Art dadurch gelöst, daß die der Mauerwand zugekehrte Dichtfläche des Ringflansches so gewählt ist, daß die Maueröffnung ringsum mit dieser Dichtfläche abgedeckt ist, daß zwischen dem Ringflansch und der Mauerwand ein Dichtelement angeordnet ist, daß der Ringflansch durch Druck- und/oder Arretiermittel gegen das Dichtelement und die Mauerwand gepreßt ist, daß die umlaufende, zur Dichtfläche des Ringflansches weisende Dichtfläche des Rohrstückes am äußeren Umfang eines radial nach außen gerichteten Ringansatzes angeordnet ist.

Weiterhin wird die gestellte Aufgabe auch mit einer zweiten Durchführung der eingangs erläuterten Art entsprechend den Merkmalen des Patentanspruchs 9 dadurch gelöst, daß die der Mauerwand zugekehrte Dichtfläche des Ringflansches so gewählt ist, daß die Maueröffnung ringsum mit dieser Dichtfläche abgedeckt ist, daß zwischen dem Ringflansch und der Mauerwand ein Dichtelement angeordnet ist, daß der Ringflansch durch Druck- und/oder Arretiermittel gegen das Dichtelement und die Mauerwand gepreßt ist und daß zwischen dem Ringflansch und dem Rohrstück ein ringförmiger Faltenbalg angeordnet ist.

Vorteile des Abschlußelementes gemäß der Erfindung sind in erster Linie darin zu sehen, daß zwischen dem Dichtelement zur Mauerwand, dem Ringflansch und dem eigentlichen Einführungsteil, dem Rohrstück eine gelenkartige, jedoch gas- und wasserdichte Verbindung besteht. Auf diese Weise kann nun die Anpassung der Vorrichtung auch in schräg zur Mauerwand angesetzten Maueröffnungen optimal erfolgen. Bei der Montage können die Längsachsen des Rohrstückes und der Maueröffnung aufeinander ausgerichtet werden, ohne daß die Abdichtung zwischen der Mauerwand und dem Ringflansch beeinflußt wird. Die Abdichtung zwischen dem Rohrstück und dem Ringflansch erfolgt nach einem ersten Ausführungsbeispiel gemäß der Erfindung nach dem Prinzip der Preßdichtungen, wie sie zum Beispiel beim Anschluß von Heizkörpern an das Leistungssystem üblich sind. Bei der Abdichtung zwischen dem Rohrstück und dem Ringflansch werden Teilkegelflächen und Teilkugelflächen gegeneinander gepreßt, wobei sich auch bei schrägem Ansatz des Rohrstückes in der Öffnung des Ringflansches infolge von gegenseitiger Abwälzung der beiden Dichtflächen eine einwandfreie Anpassung und Abdichtung zumindest in sich berührenden Mantellinien der Dichtflächen einstellt. Diese Vorteile treten besonders dann in Erscheinung, wenn das Rohrstück mit einem in die Maueröffnung reichenden Ansatz, zum Beispiel in Dübelform, versehen ist. So lassen sich nach Einführen des Ansatzes in die Maueröffnung alle Teile in einfacher Weise aufeinander ausrichten und anschließend fixieren, zum Beispiel mit einem dübelartigen Ansatz, der bei Spreizung eine einwärts gerichtete Zugkraft entwickelt. Auf diese Weise werden die Dichtungssysteme Ringflansch/Mauerwand und Ringflansch/Rohrstück mit dem nötigen Dichtdruck beaufschlagt.

Bei einem zweiten Ausführungsbeispiel wird die Beweglichkeit zwischen dem ausrichtbaren Rohrstück und dem Ringflansch mit Hilfe eines Faltenbalges herbeigeführt. Dieser ringförmige Faltenbalg ist so ausgebildet, daß die Ausrichtung der Längsachse des Rohrstückes auf die Längsachse der Maueröffnung ausgerichtet werden kann, wobei hier zusätzlich von Vorteil ist, daß am "Gelenk" keine Dichtungsprobleme auftreten, da es sich um ein geschlossenes Verbindungssystem in Gestalt des dichten Faltenbalges handelt. Die übrigen Verhältnisse gleichen dem vorangegangenen Ausführungsbeispiel.

Weitere Vorteile ergeben sich bei Ausgestaltungen des Dübelsystems in längsgeteilter Ausführung, so daß dann auch der nachträgliche Einsatz an bereits eingeführten Gegenständen vorgenommen werden kann, zum Beispiel bei einer Reparatur oder bei einer Zusatzeinführung. Zusatzeinführungen sind jedoch auch möglich, wenn das Rohrstück mit einem Adapter versehen wird, der für mehrfache, unabhängige Einführung geeignet ist, zum Beispiel wenn er mit mehreren, zunächst abgeschlossenen Einführungskanälen versehen ist.

Der in die Maueröffnung eingeführte Ansatz kann auch als Schutzrohr für die eingeführten Gegenstände angesehen werden oder als solches weitergeführt werden. Auch die Einführung eines separaten Schutzrohres ist möglich, wobei dieses dann in bzw. am Ansatz des Rohrstückes fixiert werden kann.

Die Erfindung wird nun anhand von Figuren näher erläutert.
- Die Figur 1: zeigt eine erste Vorrichtung, die in einer Maueröffnung vormontiert ist, wobei das Rohrstück vom Ringflansch getrennt ist.
- Figur 2: zeigt das Rohrstück mit einem dübelförmigen Ansatz.
- Figur 3: zeigt eine Frontansicht des Teils nach Figur 2.
- Figur 4: zeigt den Ringflansch im Querschnitt.
- Figur 5: zeigt eine zweite Vorrichtung mit beweglichem Faltenbalg zwischen dem Rohrstück und dem Ringflansch
- Figur 6: zeigt einen Kleberbelag des Dübels.
- Figur 7: zeigt einen Krallenbelag des Dübels.
- Figur 8: zeigt einen weiteren haftfördernden Belag des Dübels.
- Figur 9: zeigt einen Adapter für das Rohrstück bei Mehrfacheinführung.
- Figur 10: zeigt eine längsgeteilte Ausführungsform des Rohrstücks bzw. Dübels.
- Figur 11: zeigt einen längsverlaufenden Schnappverschluß.
- Figur 12: zeigt einen Klippverschluß mit einseitigem Filmscharnier.
- Figur 13: zeigt eine Abschlußkappe mit Ringdichtung.
- Figur 14: zeigt eine Abschlußkappe mit Rastdichtung.
- Figur 15: zeigt eine Abschlußkappe, die ins Innere des Rohrstücks eingeführt ist.
- Figur 16: zeigt eine Spreizhülse für den Dübel mit Dichtung.

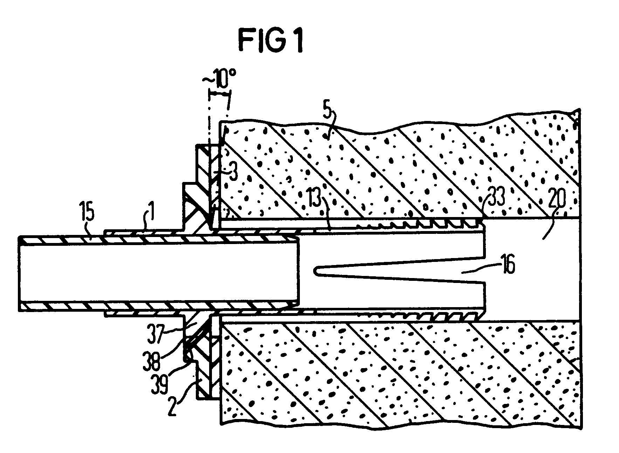

In Figur 1 wird ein Ausführungsbeispiel gemäß der Erfindung gezeigt, das bereits in der Maueröffnung 20 einer Bauwerkwand 5 eingeführt, jedoch noch nicht fixiert ist. Diese Vorrichtung besteht nun aus einem Rohrstück 1, das als eigentliches Einführungsstück dient. Dieses Rohrstück 1 besitzt am äußeren Umfang einen radial nach außen gerichteten Ringansatz 37. Das äußere Ende dieses Ringansatzes 37 ist bei diesem Ausführungsbeispiel als umlaufende Teilkugelfläche 38 ausgebildet, welche die eine Dichtfläche für das "bewegbare" Dichtungssystem bildet. Die zweite Dichtfläche hierzu ist als Gegenfläche in der Öffnung eines Ringflansches 2 in Form einer Teilkegelfläche 39 ausgebildet. Die Dichtflächen des Rohrstückes 1 und des Ringflansches 2 sind so aufeinander abgestimmt, daß sie sich beim Ineinanderfügen zumindest in einer umlaufenden Mantellinie berühren, wobei durch entsprechenden Druck die erforderliche Dichtwirkung zwischen diesen Dichtflächen erreicht werden kann. Durch die Ausbildung der Dichtflächen als Teilkugelfläche und als Teilkegelfläche ist es möglich, daß die beiden Teile durch Abwälzung gegeneinander in beliebiger Richtung verdreht werden können. Dabei ist in jeder Stellung gewährleistet, daß sich die Dichtflächen auch dichtend berühren. Auf diese Weise ist es nun möglich, daß ein entsprechender Ausgleich zwischen dem Rohrstück 1 und dem Ringflansch 2 herbeigeführt werden kann, wenn die Maueröffnung nicht senkrecht sondern unter einem Winkel in die Bauwerkswand 5 eingebracht worden ist. So wird bei der Montage zum Beispiel zuerst der Ansatz 13 des Rohrstückes 1 in die Maueröffnung 20 eingeführt und dann erst erfolgt die Ausrichtung zwischen den Dichtflächen des Rohrstückes 1 und dem Ringflansch 2. Sobald diese gegenseitige Angleichung erfolgt ist, wird die Fixierung vorgenommen, entweder mit üblichen Fixiermitteln, die direkt auf die Flansche wirken, oder mit Hilfe eines Spreizdübels, wie es bei diesem Ausführungsbeispiel gezeigt ist. Der Ansatz 13 weist Längsschlitze 16 auf, die vom freien Ende her eingebracht sind, so daß der Ansatz 13 aufspreizbar ist und dadurch gegen die Wand der Maueröffnung 20 gepreßt werden kann. Dieses Anpressen erfolgt durch Eintreibung einer Spreizhülse 15 in die Öffnung des Rohrstückes 1 bzw. seines Ansatzes 13. Um eine besonders gute Haftung zwischen dem dübelartigen Ansatz 13 und der Wandung der Maueröffnung 20 zu erhalten, ist der Spreizteil des Ansatzes 13 beispielsweise mit umlaufenden, ringförmigen Erhebungen 33 versehen. Der Ringflansch 2 wirkt mit seiner äußeren Dichtfläche als Druckmittel für eine Dichtungseinlage 3, die als Abdichtung zwischen dem Ringflansch 2 und der Mauerwand 5 eingebracht ist. Bei üblichen Stärken der Dichtungseinlagen 3 aus dauerplastischem Dichtungsmaterial, zum Beispiel auf Bitumen- oder Butylbasis, läßt sich auch noch eine toleranzmäßige Winkelabweichung zwischen der Mauer 5 und der eingebrachten Maueröffnung 20 bis zu etwa 10° ausgleichen, so daß auch noch zusätzlich bei ungleichmäßig verteilter Pressung ein zufriedenstellender Ausgleich erreicht werden kann. Solche Verhältnisse sind ebenfalls in der Figur skizziert.

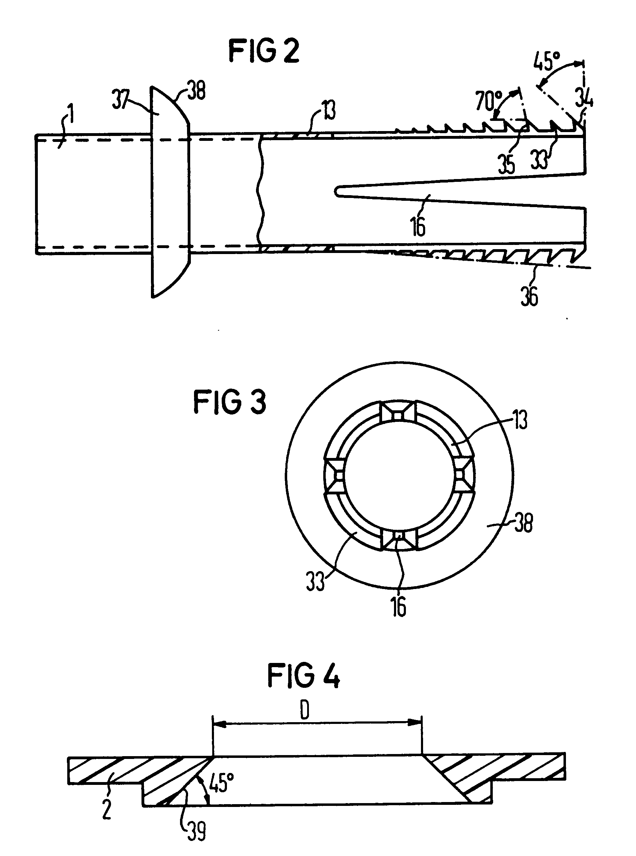

Die Figur 2 zeigt nun das Rohrstück 1 der Vorrichtung mit seinem Ansatz 13, der in die Maueröffnung eingeführt wird. Auf der linken Seite des Rohrstückes 1 ist der radial nach auswärts gerichtete Ringansatz 37 gezeigt, dessen äußere Begrenzung in Längsrichtung verlaufend mit einer Teilkugelfläche 38 als Dichtfläche für das Dichtungssystem Rohrstück/Ringflansch versehen ist. Das andere Ende des Rohrstückes 1 ist als Ansatz 13 in Form eines Spreizdübels ausgebildet, der längsgerichtete Schlitze 16 aufweist. Am äußeren Umfang dieses Ansatzes 13 sind ringförmige Erhebungen 33, vorzugsweise Spitzringe, angebracht, durch die eine bessere Haftung in der Maueröffnung gewährleistet werden kann. Diese Erhebungen 33 sind nun so ausgebildet, daß sie durch Spreizung des Ansatzes 13 eine axial wirkende Zugkraft bewirken. Durch diese Zugkraft wird das Rohrstück 1 in die Maueröffnung gezogen, wobei durch den Ringansatz 37 auch auf die Gegenfläche des Ringflansches 2 eine Kraft wirkt. Diese Kraft wirkt auch weiter auf den Ringflansch 2, so daß die Dichtung zwischen dem Ringflansch 2 und der Mauerwand ebenfalls bewirkt wird. Dies wird durch eine besondere Ausbildung der Erhebungen 33 am Ansatz 13 erreicht. So sind die Vorderflanken 34 der Erhebungen um ca. 45° und die Rückflanken 35 um ca. 70° gegen den Ringansatz 37 geneigt. Außerdem werden die Erhebungen 33 vom freien Ende her in Richtung zum Ringansatz 37 in ihrer Höhe immer geringer, wie die Hüllkurve 36 in der Figur andeutet.

Die Figur 3 läßt in einer Ansicht auf die Dübelseite erkennen, daß der dübelartige Ansatz 13 mit vier in Längsrichtung enger werdenden Schlitzen 16 versehen ist. Ferner ist die ringförmige Ausbildung der Erhebungen 33 und die Teilkugelfläche 38 des Ringansatzes 37 erkennbar.

Die Figur 4 zeigt in einem Querschnitt die Ausbildung des Ringflansches 2 mit seiner Teilkegelfläche 39, die vorzugsweise eine Neigung von 45° aufweist. Diese Teilkegelfläche 39 und der Durchmesser D der inneren Öffnung des Ringflansches 2 sind in ihrer Dimensionierung auf die Gegenfläche des Rohrstückes 1, das in der Figur 2 ausführlich dargestellt ist, abgestimmt, so daß sich beide Dichtflächen in der oben beschriebenen Weise ergänzen. Vorzugsweise sind die Abmessungen so gewählt, daß bei achsengleichem Einbau die gegenseitige Berührung in ihren Mittelbereichen erfolgt.

Bei Bedarf können die Dichtflächen mit einer Dichtungsmasse belegt werden, wenn die Dichtwirkung zusätzlich erhöht werden soll. Auch separate Einlagen können hierfür gewählt werden.

Als Material für die Einzelteile der Vorrichtung kommen korrosionsfeste Materialien in Frage, wie zum Beispiel korrosionsfestes Metall oder Kunststoff, vorzugsweise Polyethylen.

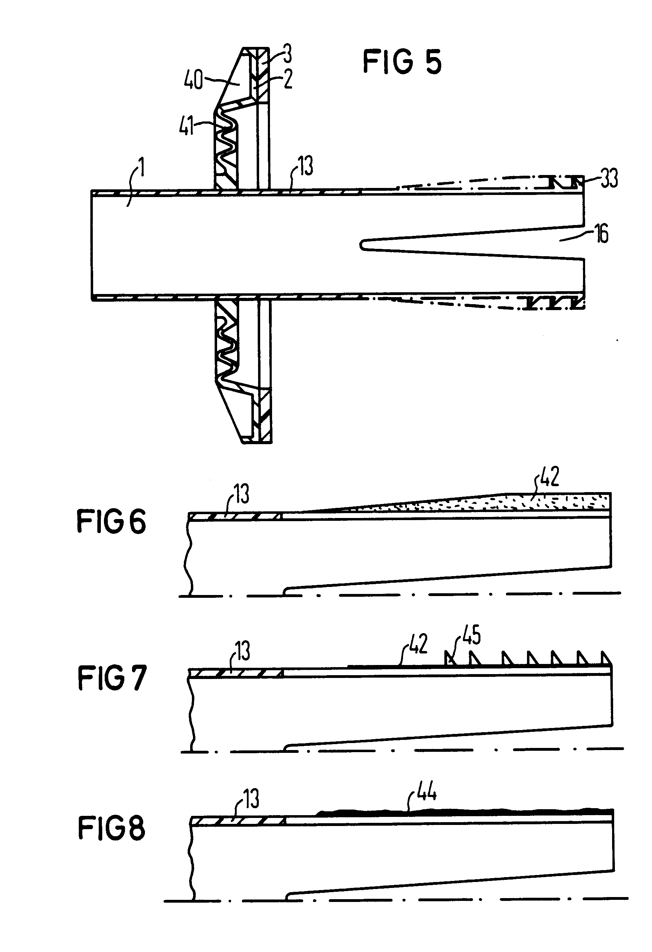

Nach einem in Figur 5 dargestellten, zweiten Ausführungsbeispiel gemäß der Erfindung ist die Bewegbarkeit zwischen dem Rohrstück 1 und dem Ringflansch 2 mit Hilfe eines ringförmigen Faltenbalges 41 gelöst, der zwischen den beiden Teilen eingefügt ist. Dieser Faltenbalg 41 kann nun einstückig mit den beiden Teilen, dem Rohrstück 1 und dem Ringflansch 2 verbunden sein, so daß in diesem Bereich keine Dichtungsprobleme mehr auftreten. Doch ist es unter Umständen auch zweckmäßig, den Faltenbalg 41 als Einzelteil oder als Ansatzteil an einem der Einführungsteile anzubringen, wenn andere zusätzliche Probleme gelöst werden sollen. So könnte eine solche Ausführung beispielsweise nützlich sein, wenn man eine Längsteilung für das Rohrstück und/oder den dübelartigen Ansatz vorsieht. Dies hat dann wiederum den Vorteil, daß das Abschlußelement 1-2 auch nachträglich bei bereits eingeführten und ungeschnittenen Gegenständen eingesetzt werden kann. Dafür sind dann Zusatzdichtungen, wie Schellen, Kleber oder Klemmenansätze am Faltenbalg 41 sowie am Rohrstück 1 und/oder am Ringflansch 2 vorgesehen. Somit ist das Grundproblem, die Beweglichkeit zwischen dem Rohrstück 1 und dem Ringflansch 2 zur Winkelanpassung des Rohrstücks 1 auf eine eventuell schräg verlaufende Maueröffnung in einfacher Weise gelöst. Das Rohrstück 1 besitzt im übrigen wiederum einen in die Maueröffnung einzuführenden Ansatz 13, der als Spreizdübel mit Längsschlitzen 16 und den bereits beschriebenen Ausbildungen versehen ist. Der Ringflansch 2 kann aus Festigkeitsgründen zum Beispiel mit radial gerichteten Verstärkungsrippen 40 versehen werden, so daß die Druckfläche für das ringförmige Dichtungselement 3 versteift ist. Im übrigen gelten auch hier die bereits erläuterten Dimensionierungen.

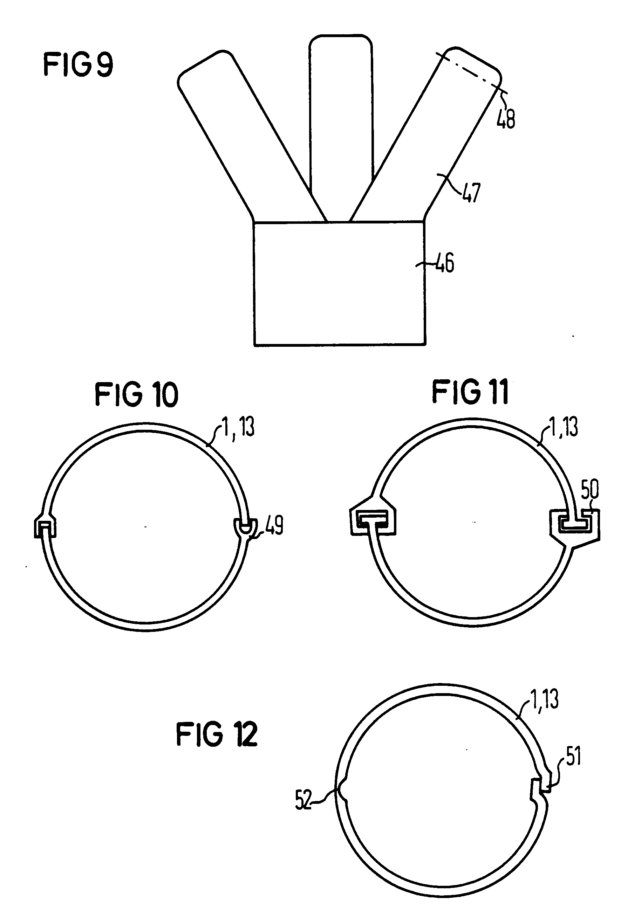

Die Figuren 6, 7 und 8 zeigen jeweils Ausschnitte des als Spreizdübel ausgebildeten Ansatzes 13, wobei hier besonders Wert darauf gelegt worden ist, daß das Dübelteil des Ansatzes 13 sehr griffig bzw. haftfähig ausgebildet ist, um auch bei sehr glatten Wänden in den Maueröffnungen eine einwandfreie Fixierung garantieren zu können. Dies ist besonders deshalb wichtig, da durch die besondere Dübelgestaltung beim Spreizen des Dübels eine Zugkraft entwickelt werden soll, die den erforderlichen Schließdruck an den Dichtungsstellen des Ringflansches und gegebenenfalls des Rohrstückes sicherstellt. Hierzu ist auch bereits vorteilhaft, wenn zumindest der dübelartige Teil des Ansatzes 13 bereits aus einem rutschsicheren Material besteht, das auch an glatten Flächen gute Haftung gewährleistet. Zusätzlich oder auch für sich alleine können nun noch Beschichtungen 42, zum Beispiel aus groben und rauhen Granulaten, Spänen, Sand oder ähnlichen Elementen alleine oder in Materialmischungen aufgebracht werden, wie die Figur 6 andeutet. Eine andere Möglichkeit zur Erhöhung der Rutschfestigkeit bietet sich durch die Verwendung von Hakensystemen 45 aus metallischen oder keramischen Materialien, die zum Beispiel direkt oder auf Trägerfolien 43, wie die Figur 7 andeutet, auf die Oberfläche des Ansatzes 13 aufgebracht sind. Die Figur 8 zeigt eine Beschichtung aus einem Klebermaterial, zum Beispiel einem Heißschmelzkleber oder auch einem aushärtenden Kleber, wodurch die Haftung besonders stark und innig wird. Zugleich ist dann eine zusätzliche Dichtwirkung gegeben.

Die Figur 9 verdeutlicht einen Einführungsadapter 46 für Einfach- und/oder Mehrfacheinführung von langgestreckten Gegenständen, wobei hier mehrere fingerförmige Einführungskanäle 47 für die Einführung zur Verfügung stehen. Diese Einführungskanäle 47, die vorzugsweise an ihren Enden zunächst verschlossen sind, können als gerade oder auch als abgewinkelte "Finger" am Grundteil des Einführungsadapters 46 angeordnet sein, wobei das Grundteil im Durchmesser dem Rohrstück 1 des Abdichtungselementes 1-2 entspricht, auf welches er dichtend aufgesetzt wird. Vorzugsweise besteht der Einführungsadapter 46 aus schrumpfbarem Material und weist eine Innenbeschichtung aus Schmelzkleber auf, so daß in einfacher Weise ein dichter Abschluß zu den jeweils eingeführten Gegenständen wie auch zum Rohrstück 1 erfolgen kann. Es ist jedoch ebenso möglich, die einzelnen Öffnungen mit anderen Dichtungssystemen, die als Klemmvorrichtungen mit und ohne Kleber, Gewinde, Verschraubungen mit Dichteinsätzen aus elastischen oder klebenden Materialien oder als Lamellenverschluß mit Dichtlippen ausgebildet sind, abzuschließen. Wenn der Einführungsadapter aus nicht schrumpfbarem Material besteht, kann die Abdichtung zu dem Rohrstück 1 oder auch zu den eingeführten Gegenständen auch mit Hilfe von separaten Schrumpfschlauchstücken erfolgen, so daß auf diese Weise mit einem einzigen Einführungsadaptertyp ein weites Spektrum von Durchmesserangleichungen überbrückt werden kann. Besonders günstig ist auch die Ausbildung von am Ende abgeschlossenen "Fingern", deren Abschluß nur bei Bedarf abgeschnitten werden, so daß bei derartigen Einführungen auch nachträglich Gegenstände eingeführt werden können, ohne daß das bereits bestehende Dichtungssystem anderer Einführungen beschädigt wird. So lassen sich auch Einführungsadapter mit verschiedenen Durchmessern am Anfang und Ende als Reduzierstücke verwenden, so daß dadurch Schwierigkeiten bezüglich der Durchmesseranpassung vermieden werden können.

Die Figuren 10, 11 und 12 zeigen Ausführungsbeispiele, bei denen zumindest im Dübelbereich des Ansatzes 13 eine Längsteilung vorgenommen ist. Diese Ausführungsbeispiele eignen sich besonders für den Einsatz bei schon verlegten, also ungeschnittenen Kabeln oder anderen Substraten. Die erforderliche Längsdichtung wird dann in solchen Fällen mit an sich bekannten Dichtungssystemen vorgenommen, wie sie zum Beispiel als Nut-und Federdichtung bekannt sind (Figur 10). Die Abdichtung selbst erfolgt in der Längsteilung zum Beispiel mit Hilfe von elastischen oder dauerplastischen Dichtungsmassen oder mit Hilfe von aushärtenden Klebern. Diese Längsdichtungen können als Schiebe- (Figur 10), Schnapp- (Figur 11) oder Klippverschluß (Figur 12) ausgebildet sein und sind an sich bekannt. Für die Montage kann es zweckmäßig sein, wenn in Längsrichtung eine Zweiteilung vorgenommen worden ist, da sich mit getrennten Teilen unter Umständen besser hantieren läßt. Doch sind auch einfach längsgeteilte Systeme praktisch, die an der gegenüberliegenden Seite ein Gelenk aufweisen, das zweckmäßigerweise dicht ist. Ein solches Gelenk ist beispielsweise in Figur 12 als sogenannts Filmscharnier 52 gezeigt, das durch eine längsverlaufende Wandverdünnung gebildet wird. Durch die Materialschwächung läßt sich dann das Rohr aufklappen. Wenn die Längsteilung bis in das Rohrstück 1 und in den Ringflansch 2 vorgenommen worden ist, dann werden die notwendigen radialen Schnittstellen im Rohrstück 1, im "Gelenk" zwischen dem Rohrstück 1 und dem Ringflansch 2 und im Ringflansch 2 ebenfalls mit entsprechenden Dichtungssystemen versehen. Hier werden dann die gleichen Prinzipien, zum Beispiel der Nut- und Federdichtung angewendet, wobei jedoch im "Gelenkbereich" 38/39 bzw. 41 und im Ringflansch 2 eine Umfangsklemmung, zum Beispiel mit einem umlaufenden Spannband vorgesehen ist, um die nötige Pressung und den Zusammenhalt gewährleisten zu können. Wird der Ringflansch 2 dabei als separates Teil ausgebildet, so wird er über ein Dichtmittel gegenüber dem dübelartigen Ansatz 13 abgedichtet.

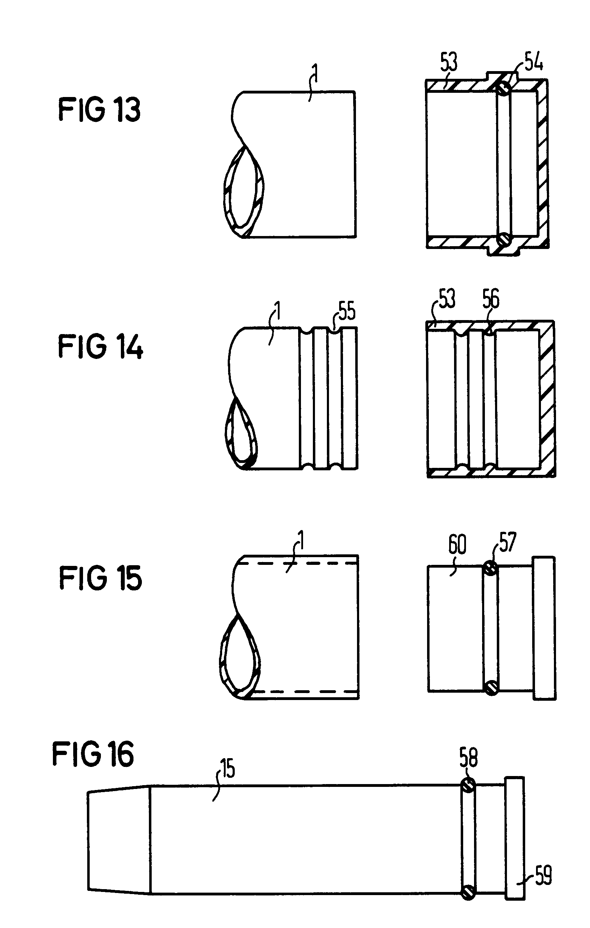

Weitere Vorteile mit Ausführungsbeispielen gemäß der Erfindung ergeben sich dadurch, wenn Abschlußkappen verwendet werden, wie sie in den Figuren 13 bis 15 gezeigt werden. Hier handelt es sich um Verschlüsse für das Rohrstück 1, wenn beispielsweise der einzuführende Gegenstand aus bautechnischen Gründen oder ähnlichen noch nicht eingesetzt werden soll; ein schützender Verschluß für die Maueröffnung jedoch bereits wünschenswert erscheint. Auch vorsorglich für späteren Gebrauch angefertigte Einführungsöffnungen können auf diese Weise geschützt und auch abgedichtet werden. Die Figur 13 zeigt hierfür eine Abschlußkappe 53, die über das Rohrstück 1 bis zum Ende aufgeschoben wird. Im Inneren der Abschlußkappe 53 ist ein umlaufender Dichtungsring 54 in einer Nut eingelegt, durch den Abdichtung erfolgt. Die Figur 14 zeigt für den gleichen Zweck ein Ausführungsbeispiel, bei dem das Rohrstück 1 mit umlaufenden Nuten 55 versehen ist, in welche entsprechend angeordnete Wülste 56 oder auch Dichtungen der aufgeschobenen Abschlußkappe 53 einrasten. Die Figur 15 zeigt schließlich eine Abschlußkappe 60, die als Stöpsel in der Öffnung des Rohrstückes 1 eingeschoben wird. Die Abdichtung erfolgt ähnlich wie bei anderen Beispielen zum Beispiel mit einer umlaufenden, in einer Nut eingelegten Dichtung 57. Bei Bedarf können diese Abschlußkappen 53 und 60 ohne Schwierigkeiten abgezogen werden und das bereits eingesetzte Einführungssystem steht dann ohne zusätzliche Montagearbeiten voll zur Verfügung. Solche außengreifende oder innengreifende Abschlußkappen können weiterhin mit den verschiedensten, an sich bekannten Dichtungssystemen als selbstklemmende, rastende, schraubbare oder mit Klemmeinrichtungen versehene Einheiten ausgebildet sein, wobei jeweils zusätzlich Dichtmittel eingesetzt werden können.

Die Figur 16 zeigt einen Spreizdorn 15, der zum Aufspreizen des dübelartigen Ansatzes 13 dient, in welchen er bei Bedarf eingetrieben wird. Nun kann auch dieser Spreizdübel 15 mit einer umlaufenden Abdichtung versehen werden, wie sie bereits bei den Abschlußkappen diskutiert wurden. Als Ausführungsbeispiel wurde hier die Abdichtung mit Hilfe einer umlaufenden Dichtung 58 gewählt. Ein Anschlag 59 begrenzt den Eintreibvorgang und eröffnet die Möglichkeit für eventuell nötiges Ausziehen des eingetriebenen Spreizdornes 15. Die Abdichtung kann wiederum mit elastischen, dauerplastischen Dichtmitteln, mit Heiß- oder Kaltklebern oder auch mit aushärtenden Klebern erfolgen, wobei der Spreizdorn 15 wie die Abschlußkappen als glattes oder geriffeltes Rohr mit oder ohne Rastung oder auch mit Gewinde ausgebildet werden kann.

Schließlich läßt sich das Rohrstück 1, das "Gelenk" 38/39 bzw. 41 oder auch der Ringflansch 2 mit Ventileinsätzen versehen, die je nach Vorhaben plaziert und eingesetzt werden können. Sie können zum Beispiel dazu dienen, einen Druck innerhalb des Systems aufzubauen oder eventuell auch zu halten. Sie können jedoch beispielsweise auch bei entsprechender Forderung als Einfüllstutzen zum Ausschäumen mit geeigneten Kunststoffen Verwendung finden.

Auch bei diesen Ausführungsbeispielen ist die Verwendung von korrosionsfesten Materialien vorteilhaft, vorzugsweise werden Kunststoffe wie zum Beispiel Polyethylen verwendet.

## Patentansprüche

1. Wasser- und gasdichte Durchführung von langgestreckten Gegenständen, wie Rohren, elektrischen Leitungen oder Kabeln, durch Bauwerkswände mit Hilfe eines Schutzrohres in der Maueröffnung und Abdichtungen zum eingeführten Gegenstand, wobei zumindest an einer Mauerseite ein die Maueröffnung abschließendes rohrförmiges Abschlußelement angeordnet ist, das Abschlußelement ein Rohrstück und einen senkrecht zur Achse der Maueröffnung radial nach auswärts gerichteten Ringflansch aufweist, wobei weiter das Schutzrohr innerhalb der Maueröffnung bis in das Abschlußelement reichend angeordnet ist, weiterhin Abdichtungen zwischen dem Abschlußelement und dem eingeführten Gegenstand zumindest auf der mit dem Abschlußelement versehenen Mauerseite, vorzugsweise auf der Außenseite der Mauer, vorgesehen sind und wobei außerdem der Ringflansch vom Rohrstück getrennt ist, das Rohrstück beweglich und dicht in der Öffnung des Ringflansches angeordnet ist und die Dichtflächen als umlaufende, sich berührende Flächen ausgebildet sind,
**dadurch gekennzeichnet,**
daß die der Mauerwand (5) zugekehrte Dichtfläche des Ringflansches (2) so gewählt ist, daß die Maueröffnung (20) ringsum mit dieser Dichtfläche abgedeckt ist, daß zwischen dem Ringflansch (2) und der Mauerwand (5) ein Dichtelement (3) angeordnet ist, daß der Ringflansch (2) durch Druck- und/oder Arretiermittel gegen das Dichtelement (3) und die Mauerwand (5) gepreßt ist, daß die umlaufende, zur Dichtfläche (39) des Ringflansches (2) weisende Dichtfläche (38) des Rohrstückes (1) am äußeren Umfang eines radial nach außen gerichteten Ringansatzes (37) angeordnet ist.

2. Durchführung nach Anspruch 1,
**dadurch gekennzeichnet,**
daß sich die umlaufenden Dichtflächen (38, 39) des Ringflansches (2) und des Rohrstückes (1) in einer umlaufenden Mantellinie berühren.

3. Durchführung nach Anspruch 2,
**dadurch gekennzeichnet,**
daß die eine Dichtfläche als Teilkugelfläche (38) und die zweite gegenüberliegende Dichtfläche als Teilkegelfläche (39) ausgebildet ist und so aufeinander abgestimmt sind, daß in jeder Stellung ausreichende Dichtwirkung erreichbar ist.

4. Durchführung nach Anspruch 1,
**dadurch gekennzeichnet,**
daß das Rohrstück (1) mit seiner umlaufenden Dichtfläche mittels Druckmittel, insbesondere Schrauben, an die Dichtfläche des Ringflansches (2) angepreßt ist.

5. Durchführung nach Anspruch 1 oder 2,
**dadurch gekennzeichnet,**
daß das Rohrstück (1) mit einem radial nach auswärts gerichteten Ringansatz (37) als Druckmittel ein in die Maueröffnung (20) ragendes Zugelement aufweist.

6. Durchführung nach einem der vorhergehenden Ansprüche,
**dadurch gekennzeichnet,**
daß zwischen den Dichtflächen (38, 39) des Rohrstückes (1) und des Ringflansches (2) ein Zusatzdichtmittel, insbesondere auf Bitumen- oder Butylbasis, angeordnet ist.

7. Durchführung nach einem der vorhergehenden Ansprüche,
**dadurch gekennzeichnet,**
daß die Neigung der Teilkegelfläche (39) 45° beträgt.

8. Durchführung nach einem der vorhergehenden Ansprüche,
**dadurch gekennzeichnet,**
daß der Radius der Teilkugelfläche so gewählt ist, daß die gemeinsame Berührungslinie bei achsengleicher Zusammenfügung von Rohrstück (1) und Ringflansch (2) im Mittelbereich der beiden Dichtflächen liegt.

9. Wasser- und gasdichte Durchführung von langgestreckten Gegenständen, wie Rohren, elektrischen Leitungen oder Kabeln, durch Bauwerkswände mit Hilfe eines Schutzrohres in der Maueröffnung und Abdichtungen zum eingeführten Gegenstand, wobei zumindest an einer Mauerseite ein die Maueröffnung abschließendes rohrförmiges Abschlußelement angeordnet ist, das Abschlußelement ein Rohrstück und einen senkrecht zur Achse der Maueröffnung radial nach auswärts gerichteten Ringflansch aufweist, wobei weiter das Schutzrohr innerhalb der Maueröffnung bis in das Abschlußelement reichend angeordnet ist, weiterhin Abdichtungen zwischen dem Abschlußelement und dem eingeführten Kabel zumindest auf der mit dem Abschlußelement versehenen Mauerseite, vorzugsweise auf der Außenseite der Mauer, vorgesehen sind und wobei außerdem der Ringflansch vom Rohrstück getrennt ist, das Rohrstück beweglich und dicht in der Öffnung des Ringflansches angeordnet ist und die Dichtflächen als umlaufende, sich berührende Flächen ausgebildet sind,
**dadurch gekennzeichnet,**
daß die der Mauerwand (5) zugekehrte Dichtfläche des Ringflansches (2) so gewählt ist, daß die Maueröffnung (20) ringsum mit dieser Dichtfläche abgedeckt ist, daß zwischen dem Ringflansch (2) und der Mauerwand (5) ein Dichtelement (3) angeordnet ist, daß der Ringflansch (2) durch Druck- und/oder Arretiermittel gegen das Dichtelement (3) und die Mauerwand (5) gepreßt ist und daß zwischen dem Ringflansch (2) und dem Rohrstück (1) ein ringförmiger Faltenbalg (41) angeordnet ist.

10. Durchführung nach einem der vorhergehenden Ansprüche,
**dadurch gekennzeichnet,**
daß das Rohrstück (1) einen in die Maueröffnung (20) ragenden Ansatz (13) aufweist.

11. Durchführung nach Anspruch 10,
**dadurch gekennzeichnet,**
daß der Ansatz (13) als Spreizdübel ausgebildet ist.

12. Durchführung nach Anspruch 10,
**dadurch gekennzeichnet,**
daß der als Spreizdübel ausgebildete Ansatz (13) mit Erhebungen (33), vorzugsweise umlaufend angeordneten Spitzringen, versehen ist.

13. Durchführung nach Anspruch 12,
**dadurch gekennzeichnet,**
daß die Flanken der Erhebungen (33) so geneigt sind, daß bei Spreizung des dübelförmigen Ansatzes (13) auf das Rohrstück (1) eine Zugkraft wirkt, durch die der erforderliche Dichtungsdruck an den Dichtflächen (38, 39) zwischen dem Rohrstück (1) und dem Ringflansch (2), sowie zwischen dem Ringflansch (2) und der Mauer (5) gegeben ist.

14. Durchführung nach Anspruch 13,
**dadurch gekennzeichnet,**
daß die Vorderflanken (34) der Erhebungen (33) in Richtung des Ringflansches (2) unter einem Winkel von vorzugsweise ca. 45° und die Rückflanken (35) in einem Winkel von vorzugsweise ca. 70° geneigt sind.

15. Durchführung nach einem der Ansprüche 12 bis 14,
**dadurch gekennzeichnet,**
daß die Erhebungen (3) nahe dem Ringflansch (2) niedriger sind als die Erhebungen (33) am Ende des Ansatzes (13).

16. Durchführung nach einem der vorhergehenden Ansprüche,
**dadurch gekennzeichnet,**
daß die Oberflächen des dübelartigen Ansatzes (13) mit einer rutschsicheren Beschichtung aus rauhen Granulaten, Spänen, Sand oder ähnlichen Stoffen aufweisen.

17. Durchführung nach einem der Ansprüche 12 bis 15,
**dadurch gekennzeichnet,**
daß die Oberflächen des dübelartigen Ansatzes (13) mit einem belagartigen Hakensystem aus zum Beispiel griffigen metallischen oder keramischen Elementen versehen ist.

18. Durchführung nach einem der Ansprüche 11 bis 15,
**dadurch gekennzeichnet,**
daß der dübelartige Ansatz (13) selbst aus rutschfestem Material besteht.

19. Durchführung nach einem der vorhergehenden Ansprüche,
**dadurch gekennzeichnet,**
daß die Oberfläche des dübelartigen Ansatzes (13) mit einer Kleberbeschichtung versehen ist.

20. Durchführung nach einem der vorhergehenden Ansprüche,
**dadurch gekennzeichnet,**
daß der Ringflansch (2) Verstärkungsrippen (40) aufweist.

21. Durchführung nach einem der vorhergehenden Ansprüche,
**dadurch gekennzeichnet,**
daß das Rohrstück (1) einen Einführungsadapter (46) aufweist.

22. Durchführung nach Anspruch 21,
**dadurch gekennzeichnet,**
daß der Einführungsadapter (46) mehrere Einführungskanäle (47), vorzugsweise mit geschlossenen, auftrennbaren Enden aufweist und daß die offenen Enden mit Dichtungssystemen versehbar sind.

23. Durchführung nach einem der Ansprüche 21 oder 22,
**dadurch gekennzeichnet,**
daß der Einführungsadapter (46) zumindest an seinen Einführungskanälen (47) aus schrumpfbarem Material besteht.

24. Durchführung nach einem der vorhergehenden Ansprüche,
**dadurch gekennzeichnet,**
daß das Rohrstück (1) zumindest jedoch sein Ansatz (13) zumindest einfach längsgeteilt und in jeder Teilung mit einem Längsverschluß (49, 50, 51) versehen ist.

25. Durchführung nach Anspruch 24,
**dadurch gekennzeichnet,**
daß der Längsverschluß (49, 50,51) als Dichtmittel einen Kleber, insbesondere einen aushärtenden Kleber aufweist.

26. Durchführung nach einem der Ansprüche 24 oder 25,
**dadurch gekennzeichnet,**
daß der Längsverschluß (49, 50, 51) als Rast- oder Klippverschluß ausgebildet ist.

27. Durchführung nach einem der Ansprüche 24 bis 26,
**dadurch gekennzeichnet,**
daß ein Längsverschluß (51) und ein Klappscharnier (52), vorzugsweise ein "Filmscharnier", angordnet sind.

28. Durchführung nach einem der vorhergehenden Ansprüche,
**dadurch gekennzeichnet,**
daß im Rohrstück (1) und/oder im Ringflansch (2) ein Ventil angeordnet ist.

29. Durchführung nach einem der vorhergehenden Ansprüche,
**dadurch gekennzeichnet,**
daß das Rohrstück (1) mit einer außen greifenden, abdichtbaren Abschlußkappe (53) versehen ist.

30. Durchführung nach einem der Ansprüche 1 bis 28,
**dadurch gekennzeichnet,**
daß das Rohrstück (1) mit einer innen eingreifenden Abschlußkappe (60) versehen ist.

31. Durchführung nach einem der vorhergehenden Ansprüche,
**dadurch gekennzeichnet,**
daß die Spreizhülse (15) eine äußere Ringdichtung (58) aufweist.

32. Durchführung nach einem der vorhergehenden Ansprüche,
**dadurch gekennzeichnet,**
daß die Vorrichtungsteile (1, 2) aus korrosionsfestem Material, aus Metall oder Kunststoff, vorzugsweise aus Polyethylen, bestehen.

## Claims

1. Water tight and gastight passage of elongate objects, such as pipes, electric leads or cables, through walls of buildings with the aid of a protective pipe in the wall opening and seals towards the object inserted, a tubular terminating element, terminating the wall opening, being arranged on at least one side of the wall, said terminating element having a tubular piece and an annular flange directed radially outwards perpendicular to the axis of the wall opening, furthermore the protective tube being arranged within the wall opening so as to extend into the terminating element, furthermore seals being provided between the terminating element and the object inserted at least on the side of the wall, preferably the outside of the wall, provided with the terminating element and, additionally, the annular flange being separate from the tubular piece, the tubular piece being arranged movably and tightly in the opening of the annular flange, and the sealing surfaces being constructed as circumferential contacting surfaces, characterised in that the sealing surface of the annular flange (2) facing the wall (5) is selected such that the wall opening (20) is covered all around by this sealing surface, in that a sealing element (3) is arranged between the annular flange (2) and the wall (5), in that the annular flange (2) is pressed against the sealing element (3) and the wall (5) by pressing and/or securing means, in that the circumferential sealing surface (38) of the tubular piece (1) facing the sealing surface (39) of the annular flange (2) is arranged on the outside circumference of a radially outwardly directed annular shoulder (37).

2. Passage according to Claim 1, characterised in that the circumferential sealing surfaces (38, 39) of the annular flange (2) and of the tubular piece (1) contact each other in a circumferential generating line.

3. Passage according to Claim 2, characterised in that the one sealing surface is constructed as a partially spherical surface (38) and the second, opposite sealing surface is constructed as a partially conical surface (39) and said sealing surfaces are matched to one another in such a way that a sufficient sealing effect can be achieved in any position.

4. Passage according to Claim 1, characterised in that the tubular piece (1) is pressed with its circumferential sealing surface onto the sealing surface of the annular flange (2) by pressing means, in particular bolts.

5. Passage according to Claim 1 or 2, characterised in that the tubular piece (1) with a radially outwardly directed annular shoulder (37) has as pressing means a tension element which projects into the wall opening (20).

6. Passage according to one of the preceding claims, characterised in that an additional sealant, in particular on the basis of bitumen or butyl, is arranged between the sealing surfaces (38, 39) of the tubular piece (1) and of the annular flange (2).

7. Passage according to one of the preceding claims, characterised in that the inclination of the partially conical surface (39) is 45°.

8. Passage according to one of the preceding claims, characterised in that the radius of the partially spherical surface is selected such that, in the case of equiaxial joining of the tubular piece (1) and the annular flange (2), the common line of contact lies in the central region of the two sealing surfaces.

9. Water tight and gastight passage of elongate objects, such as pipes, electric leads or cables, through walls of buildings with the aid of a protective pipe in the wall opening and seals towards the object inserted, a tubular terminating element, terminating the wall opening, being arranged on at least one side of the wall, said terminating element having a tubular piece and an annular flange directed radially outwards perpendicular to the axis of the wall opening, furthermore the protective tube being arranged within the wall opening so as to extend into the terminating element, furthermore seals being provided between the terminating element and the cable inserted at least on the side of the wall, preferably the outside of the wall, provided with the terminating element and, additionally, the annular flange being separate from the tubular piece, the tubular piece being arranged movably and tightly in the opening of the annular flange, and the sealing surfaces being constructed as circumferential contacting surfaces, characterised in that the sealing surface of the annular flange (2) facing the wall (5) is selected such that the wall opening (20) is covered all around by this sealing surface, in that a sealing element (3) is arranged between the annular flange (2) and the wall (5), in that the annular flange (2) is pressed against the sealing element (3) and the wall (5) by pressing and/or securing means, and in that an annular bellows (41) is arranged between the annular flange (2) and the tubular piece (1).

10. Passage according to one of the preceding claims, characterised in that the tubular piece (1) has a shoulder (13) projecting into the wall opening (20).

11. Passage according to Claim 10, characterised in that the shoulder (13) is constructed as a straddling dowel.

12. Passage according to Claim 10, characterised in that the shoulder (13), constructed as a straddling dowel, is provided with elevations (33), preferably circumferentially arranged pointed rings.

13. Passage according to Claim 12, characterised in that the flanks of the elevations (33) are inclined in such a way that, in the case of the dowel-type shoulder (13) widening, a tensile force acts on the tubular piece (1), by means of which tensile force the required sealing pressure is provided at the sealing surfaces (38, 39) between the tubular piece (1) and the annular flange (2) and between the annular flange (2) and the wall (5).

14. Passage according to Claim 13, characterised in that the front flanks (34) of the elevations (33) are inclined in the direction of the annular flange (2) at an angle of preferably about 45° and the rear flanks (35) are inclined at an angle of preferably about 70°.

15. Passage according to one of Claims 12 to 14, characterised in that the elevations (3) near to the annular flange (2) are lower than the elevations (33) at the end of the shoulder (13).

16. Passage according to one of the preceding claims, characterised in that the surfaces of the dowel-type shoulder (13) are provided with an anti-slip coating made of rough granules, chips, sand or similar materials.

17. Passage according to one of Claims 12 to 15, characterised in that the surfaces of the dowel-type shoulder (13) are provided with a covering-type hook system, for example made of metallic or ceramic elements with good grip.

18. Passage according to one of Claims 11 to 15, characterised in that the dowel-type shoulder (13) itself consists of anti-slip material.

19. Passage according to one of the preceding claims, characterised in that the surface of the dowel-type shoulder (13) is provided with an adhesive coating.

20. Passage according to one of the preceding claims, characterised in that the annular flange (2) has reinforcing ribs (40).

21. Passage according to one of the preceding claims, characterised in that the tubular piece (1) has an insertion adaptor (46).

22. Passage according to Claim 21, characterised in that the insertion adaptor (46) has a plurality of insertion channels (47), preferably with closed, separable ends, and in that the open ends can be provided with sealing systems.

23. Passage according to one of Claims 21 or 22, characterised in that the insertion adaptor (46) consists of shrinkable material at least on its insertion channels (47).

24. Passage according to one of the preceding claims, characterised in that the tubular piece (1), or at least its shoulder (13), is divided longitudinally at least once and is provided in each division with a longitudinal closure (49, 50, 51).

25. Passage according to Claim 24, characterised in that the longitudinal closure (49, 50, 51) has as sealant an adhesive, in particular a curing adhesive.

26. Passage according to one of Claims 24 or 25, characterised in that the longitudinal closure (49, 50, 51) is constructed as an engaging or clipping closure.

27. Passage according to one of Claims 24 to 26, characterised in that there are arranged a longitudinal closure (51) and a folding hinge (52), preferably a "film hinge".

28. Passage according to one of the preceding claims, characterised in that a valve is arranged in the tubular piece (1) and/or in the annular flange (2).

29. Passage according to one of the preceding claims, characterised in that the tubular piece (1) is provided with an externally engaging, sealable terminating cap (53).

30. Passage according to one of Claims 1 to 28, characterised in that the tubular piece (1) is provided with an internally engaging terminating cap (60).

31. Passage according to one of the preceding claims, characterised in that the expansion sleeve (15) has an external annular seal (58).

32. Passage according to one of the preceding claims, characterised in that the device parts (1, 2) consist of corrosion-resistant material, of metal or plastic, preferably of polyethylene.

## Revendications

1. Traversée étanche à l'eau et aux gaz pour des objets allongés tels que des tubes, des conducteurs électriques ou des câbles, à travers des murs en maçonnerie, comportant un tube de protection ménagé dans l'ouverture du mur et des éléments établissant une étanchéité par rapport à l'objet introduit, et dans laquelle au moins sur une face du mur est disposé un élément tubulaire de fermeture, qui ferme l'ouverture du mur et comporte un élément tubulaire et une bride annulaire dirigée radialement vers l'extérieur, perpendiculairement à l,axe de l'ouverture du mur, et dans laquelle en outre le tube de protection est disposé à l'intérieur de l'ouverture du mur de manière à s'étendre jusque dans l'élément de fermeture, et en outre il est prévu des éléments d'étanchéité entre l'élément de fermeture et l'objet introduit, au moins sur la face du mur, qui est pourvue de l'élément de fermeture, de préférence sur la face extérieure du mur, et dans laquelle en outre la bride annulaire est séparée de l'élément tubulaire, ce dernier étant mobile et monté d'une manière étanche dans l'ouverture de la bride annulaire et les surfaces d'étanchéité étant agencées sous la forme de surfaces circonférentielles qui se touchent,
caractérisée par le fait
que la surface d'étanchéité de la bride annulaire (2), qui est tournée vers la paroi (5) du mur, est choisie de manière que l'ouverture (20) du mur soit recouverte, sur son pourtour, par cette surface d'étanchéité, qu'un élément d'étanchéité (3) est disposé entre la bride annulaire (2) et la paroi (5) du mur, que la bride annulaire (2) est repoussée par des moyens de serrage et/ou de blocage contre l'élément d'étanchéité (3) et contre la paroi (5) du mur, et la surface d'étanchéité circonférentielle (38) de l'élément tubulaire (1), qui est tournée vers la surface d'étanchéité (39) de la bride annulaire (2), est disposée sur la périphérie extérieure d'un embout annulaire saillant (37) dirigé radialement vers l'extérieur.

2. Traversée suivant la revendication 1, caractérisée par le fait que les surfaces circonférentielles d'étanchéité (38,39) de la bride annulaire (2) et de l'élément tubulaire (1) se touchent selon une ligne enveloppe circonférentielle.

3. Traversée suivant la revendication 2, caractérisée par le fait qu'une surface d'étanchéité est agencée sous la forme d'une surface tronconique (38) et que la seconde surface d'étanchéité opposée est réalisée sous la forme d'une surface tronconique (39) et que ces surfaces sont accordées l'une sur l'autre de telle sorte que dans chaque position, on peut obtenir une action d'étanchéité suffisante.

4. Traversée suivant la revendication 1, caractérisée par le fait que l'élément tubulaire (1) est repoussé par sa surface circonférentielle d'étanchéité contre la surface d'étanchéité de la bride annulaire (2), par des moyens de serrage, notamment des vis.

5. Traversée suivant la revendication 1 ou 2, caractérisée par le fait que l'élément tubulaire (1) pourvu d'un appendice annulaire saillant (37), dirigé radialement vers l'extérieur possède, en tant que moyen de serrage, un élément de traction qui pénètre dans l'ouverture (20) du mur.

6. Traversée suivant l'une des revendications précédentes, caractérisée par le fait qu'entre les surfaces d'étanchéité (38,39) de l'élément tubulaire (1) et de la bride annulaire (2) est disposé un moyen d'étanchéité supplémentaire, notamment à base de bitume ou de butyle.

7. Traversée suivant l'une des revendications précédentes, caractérisée par le fait que l'inclinaison de la surface tronconique (39) est égale à 45°.

8. Traversée suivant l'une des revendications précédentes, caractérisée par le fait que le rayon de la surface tronconique est choisi de telle sorte que la ligne commune de contact est située dans la zone médiane des deux surfaces d'étanchéité, lors de l'assemblage coaxial de l'élément tubulaire (1) et de la bride annulaire (2).

9. Traversée étanche à l'eau et aux gaz pour des objets allongés tels que des tubes, des conducteurs électriques ou des câbles, à travers des murs en maçonnerie, comportant un tube de protection ménagé dans l'ouverture du mur et des éléments établissant une étanchéité par rapport à l'objet introduit, et dans laquelle au moins sur une face du mur est disposé un élément tubulaire de fermeture, qui ferme l'ouverture du mur et qui comporte un élément tubulaire et une bride annulaire dirigée radialement vers l'extérieur, perpendiculairement à l'axe de l'ouverture du mur, et dans laquelle en outre le tube de protection est disposé à l'intérieur de l'ouverture du mur de manière à s'étendre jusque dans l'élément de fermeture, et en outre il est prévu des éléments d'étanchéité entre l'élément de fermeture et le câble inséré, au moins sur la face du mur, qui est pourvue de l'élément de fermeture, de préférence sur la face extérieure du mur, et dans laquelle en outre la bride annulaire est séparée de l'élément tubulaire, ce dernier étant mobile et monté d'une manière étanche dans l'ouverture de la bride annulaire et les surfaces d'étanchéité étant agencées sous la forme de surfaces circonférentielles qui se touchent,
caractérisée par le fait
que la surface d'étanchéité de la bride annulaire (2), et qui est tournée vers la paroi (5) du mur, est choisie de manière que l'ouverture (20) du mur soit recouverte, sur son pourtour, par cette surface d'étanchéité, qu'un élément d'étanchéité (3) est disposé entre la bride annulaire (2) et la paroi (5) du mur, que la bride annulaire (2) est repoussée par des moyens de serrage et/ou de blocage contre l'élément d'étanchéité (3) et contre la paroi (5) du mur, et qu'un soufflet annulaire (41) est disposé entre la bride annulaire (2) et l'élément tubulaire (1).

10. Traversée suivant l'une des revendications précédentes, caractérisée par le fait que l'élément tubulaire (1) possède un appendice saillant (13) qui pénètre dans l'ouverture (20) du mur.

11. Traversée suivant la revendication 10, caractérisée en ce que l'appendice saillant (13) est agencé sous la forme d'une cheville à expansion.

12. Traversée suivant la revendication 10, caractérisée en ce que l'appendice saillant (13) agencé sous la forme d'une cheville à expansion comporte des bossages (33), de préférence des anneaux d'écartement disposés circonférentiellement.

13. Traversée suivant la revendication 12, caractérisée par le fait que les flancs des bossages (33) sont inclinés de telle sorte que, lors de l'expansion de l'appendice saillant en forme de cheville (13), l'élément tubulaire (1) est soumis à une force de traction, qui applique la pression d'étanchéité nécessaire entre les surfaces d'étanchéité (38,39) entre l'élément tubulaire (1) et la bride annulaire (2) ainsi qu'entre la bride annulaire (2) et le mur (5).

14. Traversée suivant la revendication 13, caractérisée par le fait que les flancs avant (34) des bossages (33) sont inclinés en direction de la bride annulaire (2) sous un angle égal de préférence à environ 45° et que les flancs arrière (35) sont inclinés sous un angle égal de préférence à environ 70°.

15. Traversée selon l'une des revendications 12 à 14, caractérisée par le fait que les bossages (33) proches de la bride annulaire (2) sont moins élevés que les bossages (33) situés à l'extrémité de l'appendice saillant (13).

16. Traversée suivant l'une des revendications précédentes, caractérisée par le fait que les surfaces de l'appendice saillant en forme de cheville (13) possèdent un revêtement antidérapant, constitué par des granulés rugueux, des copeaux, du sable ou des substances analogues.

17. Traversée suivant l'une des revendications 12 à 15, caractérisée par le fait que les surfaces de l'appendice saillant en forme de cheville (13) sont pourvues d'un système d'accrochage en forme de revêtement constitué par exemple par des éléments métalliques ou céramiques antidérapants.

18. Traversée suivant l'une des revendications 11 à 15, caractérisée par le fait que l'appendice saillant en forme de cheville (13) lui-même est réalisé en un matériau antidérapant.

19. Traversée suivant l'une des revendications précédentes, caractérisée par le fait que la surface de l'appendice saillant en forme de cheville (13) comporte un revêtement adhésif.

20. Traversée suivant l'une des revendications précédentes, caractérisée par le fait que la bride annulaire (2) possède des nervures de renforcement (40).

21. Traversée suivant l'une des revendications précédentes, caractérisée par le fait que l'élément tubulaire (1) possède un adaptateur d'introduction (46).

22. Traversée suivant la revendication 21, caractérisée par le fait que l'adaptateur d'introduction (46) comporte plusieurs canaux d'introduction (47), possédant de préférence des extrémités fermées pouvant être séparées, et que les extrémités ouvertes peuvent être pourvues de systèmes d'étanchéité.

23. Traversée suivant l'une des revendications 21 ou 22, caractérisée par le fait que l'adaptateur d'introduction (46) est réalisé, au moins au niveau de ses canaux d'introduction (47), en un matériau rétractable.

24. Traversée suivant l'une des revendications précédentes, caractérisée par le fait que l'élément tubulaire (1) ou tout au moins son appendice saillant (13) est subdivisé longitudinalement au moins une fois et comporte, dans chaque subdivision, un élément longitudinal de fermeture (49,50,51).

25. Traversée suivant la revendication 24, caractérisée en ce que l'élément longitudinal de fermeture (49,50,51) comporte, en tant que moyen d'étanchéité, une colle, notamment une colle durcissable.

26. Traversée suivant l'une des revendications 24 ou 25, caractérisée par le fait que l'élément longitudinal de fermeture (49,50,51) est agencé sous la forme d'un élément de fermeture à encliquetage ou à clip.

27. Traversée suivant l'une des revendications 24 à 26, caractérisée par le fait qu'il est prévu un élément longitudinal de fermeture (51) et une charnière à rabattement (52), de préférence une "charnière en forme de pellicule".

28. Traversée suivant l'une des revendications précédentes, caractérisée par le fait qu'une soupape est montée dans l'élément tubulaire (1) et/ou dans la bride annulaire (2).

29. Traversée suivant l'une des revendications précédentes, caractérisée par le fait que l'élément tubulaire (1) est pourvu d'un capot de fermeture (53) qui s'aggripe extérieurement et peut être étanchéifié.

30. Traversée suivant l'une des revendications 1 à 28, caractérisée par le fait que l'élément tubulaire (1) est pourvu d'un capot de fermeture (60), qui s'engage intérieurement.

31. Traversée suivant l'une des revendications précédentes, caractérisée par le fait que le manchon expansible (15) possède un élément extérieur d'étanchéité annulaire (58).

32. Traversée suivant l'une des revendications précédentes, caractérisée par le fait que les éléments (1,2) du dispositif sont réalisés en un matériau résistant à la corrosion, en un métal ou une matière plastique, de préférence en polyéthylène.
